# EUROPEAN PATENT APPLICATION

(11) **EP 4 615 031 A1**
(43) Date of publication of application: **10.09.2025**
(21) Application number: 22963987.7
(22) Date of filing: 03.11.2022
(51) Int. Cl.: H04W 24/02

(54) **METHOD AND APPARATUS FOR TRANSMITTING DATA IN ROAMING SCENARIO, AND READABLE STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/129688
(87) International publication number: WO 2024/092677

(57) **Abstract**

Provided in the present disclosure are a method and apparatus for transmitting data in a roaming scenario, and a readable storage medium. The method comprises: sending a second request message to a home network data analytics function H-NWDAF according to a first request message of a visited network function V-Consumer NF, wherein the second request message is used for requesting analysis information; after user-consent-based verification by H-NWDAF is passed, receiving a first message, which is sent by H-NWDAF and is used for indicating the analysis information; and sending to V-Consumer NF a second message used for indicating the analysis information. In the method of the present disclosure, in a roaming scenario, V-Consumer NF may request analysis information from H-NWDAF by means of V-NWDAF, and after passing user-consent-based verification, an HPLMN side provides the analysis information for V-Consumer NF, such that data exchange between a VPLMN and an HPLMN can be implemented, and user consent can also be checked so as to effectively protect the security of user data.

## Description

### TECHNICAL FILED

This disclosure relates to the field of wireless communication technology, and in particular, to a method and device for transmitting data in a roaming scenario, and a readable storage medium.

### BACKGROUND

The 3rd Generation Partner Project (3GPP) points out that a roaming scenario involves data interaction between a Home Public Land Mobile Network (HPLMN) and a Visited Public Land Mobile Network (VPLMN). In this scenario, user data may be exchanged between different entities (i.e., between HPLMN and VPLMN), and there may be a risk of user privacy leakage.

### SUMMARY

This disclosure provides a method and device for transmitting data in a roaming scenario, and a readable storage medium.

In a first aspect, a method for receiving data in a roaming scenario is provided and performed by a Network Data Analytics Function in a Visited Public Land Mobile Network (V-NWDAF). The method includes:
sending, according to a first request message from a Consumer Network Function in the Visited Public Land Mobile Network (V-Consumer NF), a second request message to a Network Data Analytics Function in a Home Public Land Mobile Network (H-NWDAF), wherein the second request message is configured for requesting analytics information;
after the H-NWDAF checks that User Consent is granted, receiving, from the H-NWDAF, a first message for indicating the analytics information; and
sending a second message for indicating the analytics information to the V-Consumer NF.

In the method of this disclosure, the V-Consumer NF can request analytics information from the H-NWDAF via the V-NWDAF in a roaming scenario. After the H-NWDAF checks that the User Consent is granted on the HPLMN side, the analytics information is provided for the V-Consumer NF. This approach not only enables data exchange between the VPLMN and the HPLMN but also checks the User Consent to effectively protect the security of user data.

In some possible embodiments, the method further includes:
receiving the first request message from the V-Consumer NF, where the first request message includes at least one of: a user equipment (UE) identifier corresponding to the analytics information, or a data processing identifier corresponding to the analytics information.

In some possible embodiments, sending, according to the first request message from the V-Consumer NF, the second request message to the H-NWDAF, includes:
after receiving the first request message, determining, according to a local operator policy and/or a regulatory policy of the Visited Public Land Mobile Network (VPLMN), whether the VPLMN is allowed to obtain analytics information from the Home Public Land Mobile Network (HPLMN); and
in response to an allowance for obtaining the analytics information from the HPLMN, sending the second request message to the H-NWDAF.

In some possible embodiments, sending the second request message to the H-NWDAF includes:
directly sending the second request message to the H-NWDAF when the V-NWDAF serves as a Central Network Function in the VPLMN (V-Central NF); or
sending, via the V-Central NF, the second request message to the H-NWDAF.

In some possible embodiments, the V-Central NF is one of:
the V-NWDAF;
a Data Collection Coordination Function (DCCF);
a Network Exposure Function (NEF); or
a Gateway Exposure Function (GEF).

In some possible embodiments, the method further includes:
receiving a first notification message sent by the H-NWDAF, where the first notification message is configured for notifying that the User Consent is modified or revoked; and
sending a second notification message to the V-Consumer NF, where the second notification message is configured for instructing the V-Consumer NF to stop processing the analytics information and delete the obtained analytics information.

In some possible embodiments, receiving the first notification message sent by the H-NWDAF includes:
receiving, via a V-Central NF, the first notification message sent by the H-NWDAF.

In a second aspect, a method for sending data in a roaming scenario is provided and performed by an H-NWDAF. The method includes:
receiving a second request message sent by a V-NWDAF, where the second request message is configured for requesting analytics information; and
after checking that User Consent is granted, sending a first message for indicating the analytics information to the V-NWDAF.

In the method of this disclosure, when the V-Consumer NF requests analytics information in a roaming scenario, after the H-NWDAF checks that User Consent is granted on the HPLMN side, the H-NWDAF can provide analytics information for the V-Consumer NF. This approach not only enables data exchange between the VPLMN and the HPLMN but also checks the User Consent to effectively protect the security of user data.

In some possible embodiments, after checking that the User Consent is granted, sending the first message for indicating the analytics information to the V-NWDAF includes:
determining, according to the User Consent and a local operator policy and/or a regulatory policy of the HPLMN, whether to allow providing the analytics information to the VPLMN; and
in response to an allowance for providing the analytics information to the VPLMN, sending the first message for indicating the analytics information to the V-NWDAF.

In some possible embodiments, the method further includes:
when the User Consent is modified or revoked, sending a first notification message to the V-NWDAF.

In some possible embodiments, the method further includes:
when the User Consent is modified or revoked, updating user equipment (UE) context stored in the H-NWDAF.

In a third aspect, this disclosure provides a device for receiving data in a roaming scenario. This device can be configured to execute the steps performed by the V-NWDAF in the first aspect or any possible design of the first aspect. The functions in the above methods can be implemented in the form of a hardware structure, a software module, or a combination of a hardware structure and a software module.

When the communication device shown in the first aspect is implemented by a software module, the communication device can include a transceiver module.

The transceiver module is configured to send, according to a first request message from a V-Consumer NF, a second request message to an H-NWDAF, where the second request message is configured for requesting analytics information.

The transceiver module is further configured to: after the H-NWDAF checks that User Consent is granted, receive, from the H-NWDAF, a first message for indicating the analytics information.

The transceiver module is further configured to send a second message for indicating the analytics information to the V-Consumer NF.

In a fourth aspect, this disclosure provides a device for sending data in a roaming scenario. This device can be configured to execute the steps performed by the H-NWDAF in the second aspect or any possible design of the second aspect. The functions in the above methods can be implemented in the form of a hardware structure, a software module, or a combination of a hardware structure and a software module.

When the communication device shown in the second aspect is implemented by a software module, the communication device can include a transceiver module.

The transceiver module is configured to receive a second request message sent by a V-NWDAF, where the second request message is configured for requesting analytics information.

The transceiver module is further configured to, after checking that User Consent is granted, send a first message for indicating the analytics information to the V-NWDAF.

In a fifth aspect, this disclosure provides a communication device, including a processor and a memory. The memory is configured to store a computer program, and the processor is configured to execute the computer program to implement the method in the first aspect or any possible design in the first aspect.

In a sixth aspect, this disclosure provides a communication device, including a processor and a memory. The memory is configured to store a computer program, and the processor is configured to execute the computer program to implement the method in the second aspect or any possible design in the second aspect.

In a seventh aspect, this disclosure provides a computer-readable storage medium, in which instructions are stored. When the instructions are called and executed on a computer, the computer is caused to execute the method in the first aspect or any possible design in the first aspect.

In an eighth aspect, this disclosure provides a computer-readable storage medium, in which instructions are stored. When the instructions are called and executed on a computer, the computer is caused to execute the method in the second aspect or any possible design in the second aspect.

It should be understood that the above general description and the following detailed description are exemplary and explanatory only, and do not limit this disclosure.

### BRIEF DESCRIPTION OF THE DRAWINGS

The drawings described here are used to provide a further understanding of the embodiments of this disclosure and form a part of this application. The exemplary embodiments and descriptions of the embodiments of this disclosure are used to explain the embodiments of this disclosure and do not form an improper limitation to the embodiments of this disclosure. In the drawings:

The drawings here are incorporated into the specification and form a part of the specification, showing the examples consistent with the embodiments of this disclosure, and are used together with the specification to explain the principles of the embodiments of this disclosure.
FIG. 1 is a schematic diagram of a communication system architecture provided by an embodiment of this disclosure.
FIG. 2 is a flowchart of a method for transmitting data in a roaming scenario illustrated according to an exemplary embodiment of this disclosure.
FIG. 3 is a flowchart of a method for transmitting data in a roaming scenario illustrated according to another exemplary embodiment of this disclosure.
FIG. 4 is a flowchart of a method for receiving data in a roaming scenario illustrated according to an exemplary embodiment of this disclosure.
FIG. 5 is a flowchart of another method for receiving data in a roaming scenario illustrated according to an exemplary embodiment of this disclosure.
FIG. 6 is a flowchart of a method for sending data in a roaming scenario illustrated according to an exemplary embodiment of this disclosure.
FIG. 7 is a structural diagram of a device for receiving data in a roaming scenario illustrated according to an exemplary embodiment of this disclosure.
FIG. 8 is a structural diagram of a device for sending data in a roaming scenario illustrated according to an exemplary embodiment of this disclosure.

### DETAILED DESCRIPTION

The embodiments of this disclosure will be further described below in combination with the drawings and specific embodiments.

Here, the exemplary embodiments will be described in detail, the examples of which are shown in the drawings. When the following description involves the drawings, unless otherwise indicated, the same numerals in different drawings represent the same or similar elements. The examples described in the following exemplary embodiments do not represent all examples consistent with the embodiments of this disclosure. On the contrary, they are only examples of devices and methods consistent with some aspects of this disclosure as detailed in the appended claims.

The terms used in the embodiments of this disclosure are only for the purpose of describing specific embodiments and are not intended to limit the embodiments of this disclosure. The singular forms "a/an" and "the" used in the embodiments of this disclosure and the appended claims are also intended to include the plural forms, unless the context clearly indicates otherwise. It should also be understood that the term "and/or" used in this disclosure means and includes any or all possible combinations of one or more related listed items.

It should be understood that although the terms "first," "second," "third," etc. may be used in the embodiments of this disclosure to describe various information, such information should not be limited by these terms. These terms are only used to distinguish the same type of information from each other. For example, without departing from the scope of the embodiments of this disclosure, the first information can also be called the second information, and similarly, the second information can also be called the first information. Depending on the context, the words "if" and "in case" used here can be interpreted as "when... ", "at the time of...", or "in response to determining..."

The embodiments of this disclosure will be described in detail below. The examples of the embodiments are shown in the drawings, and the same or similar reference numerals represent the same or similar elements throughout. The embodiments described below with reference to the drawings are exemplary and are intended to explain this disclosure and should not be construed as limiting this disclosure.

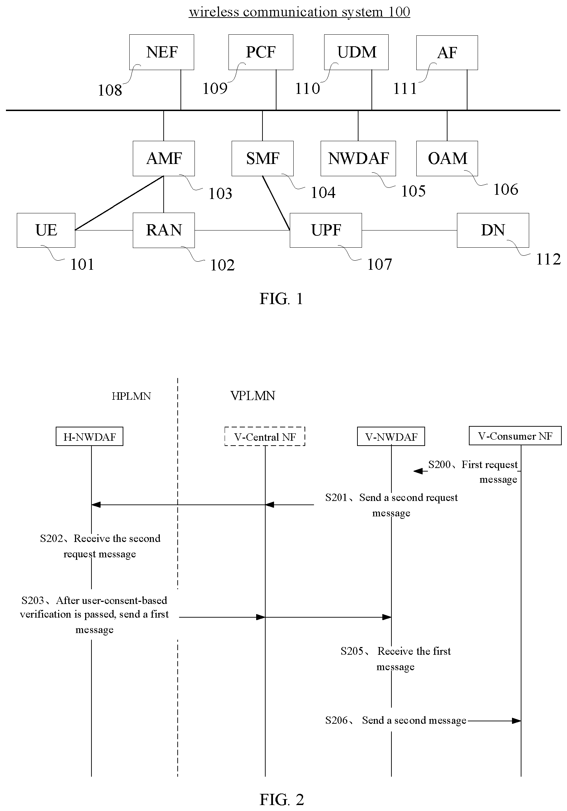

FIG. 1 shows a wireless communication system 100, which is a schematic diagram of network architecture applicable to the embodiments of this disclosure.

Taking the application of this network architecture in the 5th-Generation (5G) mobile communication technology as an example, the wireless communication system 100, as shown in FIG. 1, includes: User Equipment (UE) 101, Radio Access Network (RAN) 102, and Core Network (5GC).

The UE 101 can be a terminal, access terminal, terminal unit, terminal station, mobile station (MS), remote station, remote terminal, mobile terminal, wireless communication device, terminal agent, or terminal device, etc. The UE 101 has a wireless transceiver function and can communicate (such as via wireless communication) with one or more RANs 102 in one or more communication systems and receive network services provided by the RAN 102. The UE 101 can be a cellular phone, cordless phone, session initiation protocol (SIP) phone, wireless local loop (WLL) station, personal digital assistant (PDA) device, handheld device with a wireless communication function, computing device, or other processing devices connected to a wireless modem, vehicle-mounted device, wearable device, terminal device in a future 5G network, or terminal device in a future evolved PLMN network, etc.

The RAN 102 refers to a device that provides a network access function. The RAN 102 specifically can include a base station (BS), or include a base station and a wireless resource management device for controlling the base station. The RAN 102 can also include a relay station (relay device), an access point, a base station in a future 5G network, a base station in a future evolved PLMN network, or a NR base station, etc. The network device 102 can be a wearable device or a vehicle-mounted device. The RAN 102 can also be a communication chip with a communication module. For example, the RAN 102 includes, but is not limited to: the next-generation base station (gnodeB which also called gNB) in 5G, the evolved node B (eNB) in the LTE system, the radio network controller (RNC), the node B (NB) in the WCDMA system, the wireless controller under the CRAN system, the base station controller (BSC), the base transceiver station (BTS) in the GSM system or CDMA system, the home base station (such as home evolved node B, or home node B which also called HNB), the baseband unit (BBU), the transmitting and receiving point (TRP), the transmitting point (TP), or the mobile switching center, etc.

In the wireless communication system 100, the UE 101 can access the Data Network (DN) 112 through the RAN 102 to obtain services. The UE exchanges information with the RAN 102 through the air interface and the RAN 102 is responsible for the air interface resource scheduling and air interface connection management for the UE 101 to access the network. The DN 112 is a service network that provides data transmission services for users, such as operator services, Internet access, and third-party services.

The core network part can include the following network elements: Access and Mobility Management Function (AMF) 103, Session Management Function (SMF) 104, Network Data Analytics Function (NWDAF) 105, Operation Administration and Maintenance (OAM) 106, User Plane Function (UPF) 107, Network Exposure Function (NEF) 108, Policy and Charging Function (PCF) 109, Unified Data Management Function (UDM) 110, and Application Function (AF) 111, etc.

The AMF 103 is a core network control-plane network element, used to implement user's registration management, connection management, mobility management, and user accessibility management, and to participate in control-plane management functions such as management related to authentication and authorization.

The SMF 104 is a core network control-plane network element, mainly responsible for session management-related work, including establishment, modification, release, etc. The NWDAF 105 is a network element, introduced in 5G, mainly used for various network data analysis.

The NWDAF 105 can collect network operation data from core network control-plane Network Functions (NFs), obtain statistical data related to UE 101 and network from the OAM 106, and obtain application data from the AF 111.

The NWDAF 105 can feedback the analysis results to the NF, OAM 106, or AF 111 within a certain analysis delay.

The OAM 106 is mainly responsible for the operation, administration, and maintenance of the operator network. The operation mainly involves the analysis, prediction, planning, and configuration of daily networks and services. The maintenance mainly involves daily operation activities such as testing and fault management of the network and its services.

The UPF 107 is mainly responsible for the routing and forwarding functions of the user plane.

The NEF 108 is a core network control-plane network element, mainly responsible for exposing mobile network capabilities to external entities and the transformation of internal and external information.

The PCF 109 is a core network control-plane network element, mainly used to acquire the policy information subscribed by the user terminal and send the policy information to the AMF device and the SMF device.

The UDM 110 is a core network control-plane network element, mainly responsible for the unified processing of foreground data, including user identifiers, user subscription data, authentication data, etc.

The AF 111 interacts with the 5G core network to provide services, supports the influence of applications on traffic routing, accesses the NEF, and interacts with the policy architecture.

It should be noted that the names of the communication devices or network elements in the above-mentioned architecture are only for illustration, used to refer to the network elements in the 5G core network with corresponding functions. The connection relationships between various communication devices or network elements are only examples. In specific implementations, the names of communication devices or network elements and the connection relationships between various communication devices or network elements may be embodied in other forms, and this disclosure does not specifically limit this.

According to an embodiment of this disclosure, a method for transmitting data in a roaming scenario is provided. FIG. 2 is a flowchart of a method for transmitting data in a roaming scenario illustrated according to an exemplary embodiment. The method as shown in FIG. 2 includes steps S201 to S205. Specifically:

Step S201, sending, by a Network Data Analytics Function in a Visited Public Land Mobile Network (V-NWDAF) according to a first request message from a Consumer Network Function in the Visited Public Land Mobile Network (V-Consumer NF), a second request message to a Network Data Analytics Function in a Home Public Land Mobile Network (H-NWDAF), where the second request message is configured for requesting analytics information.

Step S202, receiving, by the H-NWDAF, the second request message sent by the V-NWDAF.

Step S203, after the H-NWDAF checks that User Consent is granted, sending, by the H-NWDAF, a first message for indicating the analytics information to the V-NWDAF.

Step S204, receiving, by the V-NWDAF, the first message sent by the H-NWDAF.

Step S205, sending, by the V-NWDAF, a second message for indicating the analytics information to the V-Consumer NF.

In this embodiment, the V-NWDAF and the V-Consumer NF are located on the VPLMN side, and the H-NWDAF is located on the HPLMN side.

"Consumer NF" is used to identify the entity or network element that requests analytics information. The V-Consumer NF can refer to any network element on the VPLMN side that requests setting data or needs to use the setting data.

In some possible embodiments, the first request message is, for example, "Nnwdaf_AnalyticsSubscription_Subscribe()".

In some possible embodiments, the method can also include Step S200 before Step S201, specifically:
Step S200, receiving, by the V-NWDAF, the first request message from the V-Consumer NF.

In an example, the first request message includes at least one of the following: a user equipment (UE) identifier (e.g., UE ID) corresponding to the analytics information, or a data processing identifier (e.g., Data Processor ID) corresponding to the analytics information.

In some possible embodiments, the UE identifier (e.g., UE ID) can include multiple forms and can uniquely identify the user equipment or the SIM card in the user equipment. For example, the UE identifier can be a Subscription Concealed Identifier (SUCI), a Subscription Permanent Identifier (SUPI), or other IDs that can identify the UE. Among them, the SUPI is a unique identifier assigned by the network operator to each SIM card, and the SUCI is an identifier generated by concealing the SUPI through an encryption scheme.

In some possible embodiments, the data processing identifier can be a PLMN ID, an Application ID, a Service ID, an analytics task ID (analytics ID), or other IDs that can identify data processing task, and is not limited here.

Taking the data processing identifier as an analytics task ID as an example, each analytics task corresponds to an analytics task identifier. For example, analytics task 1 corresponds to analytics ID1, and analytics task 2 corresponds to analytics ID2, etc.

In some possible embodiments, the second request message is, for example, "Analytics Request()".

In some possible embodiments, "User Consent" can represent the authorization status of the user for relevant data. The User Consent can be stored in the HPLMN-side network, indicating whether the analysis results or analytics information of the UE in the HPLMN-side network is allowed to be obtained. The H-NWDAF can perform relevant verification and authorization checks based on the User Consent to decide whether to provide analytics information to the VPLMN.

In an example, when the user equipment accesses the HPLMN, the H-NWDAF interacts with the user equipment to obtain the user consent information and stores the user consent information in the UDM. After receiving a request message (such as the second request message) for acquiring analytics information or analysis results, the H-NWDAF interacts with the UDM to acquire the user consent information and stores the user consent information in the UE context in the H-NWDAF.

In another example, after receiving a request message (such as the second request message) for acquiring analytics information or analysis results, the H-NWDAF interacts with the user equipment through the VPLMN network to obtain the user consent information and stores the User Consent in the UE context in the H-NWDAF.

In yet another example, after receiving a request message (such as the second request message) for acquiring analytics information or analysis results, the H-NWDAF interacts with the network element that stores the User Consent in the VPLMN network to obtain the user consent information and stores the User Consent in the UE context in the H-NWDAF.

In some possible embodiments, the first message is, for example, "Analytics Response()".

In some possible embodiments, the second message is, for example, "Nnwdaf_AnalyticsSubscription_Notify()".

In the embodiments of this disclosure, in a roaming scenario, the V-Consumer NF can request analytics information from the H-NWDAF via the V-NWDAF. After the H-NWDAF checks that the User Consent is granted on the HPLMN side, the analytics information is provided for the V-Consumer NF. This approach not only enables data exchange between the VPLMN and the HPLMN but also checks the User Consent to effectively protect the security of user data.

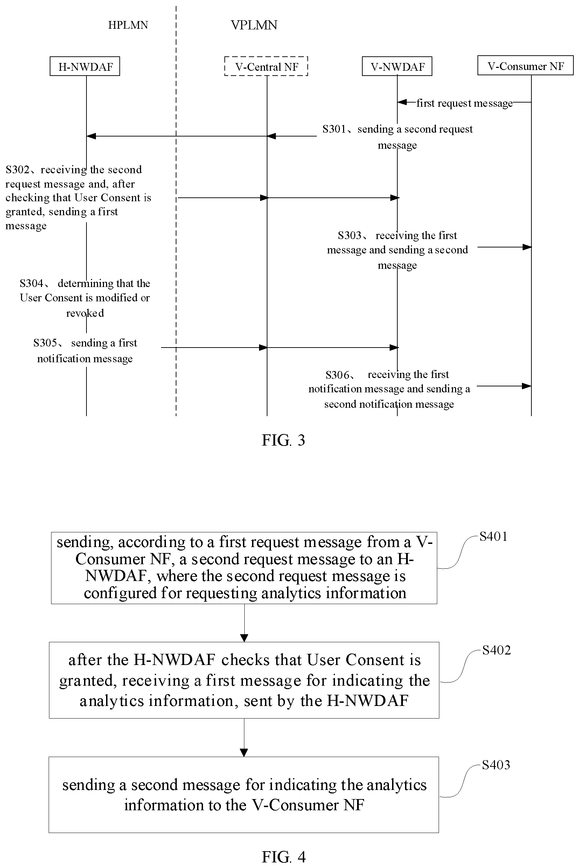

According to an embodiment of this disclosure, a method for transmitting data in a roaming scenario is provided. FIG. 3 is a flowchart of a method for transmitting data in a roaming scenario illustrated according to an exemplary embodiment. The method, as shown in FIG. 3, includes steps S301 to S306, specifically:

Step S301, sending, by a V-NWDAF according to a first request message from a V-Consumer NF, a second request message to an H-NWDAF, where the second request message is configured for requesting analytics information.

Step S302, receiving, by the H-NWDAF, the second request message and, after checking that User Consent is granted, sending a first message for indicating the analytics information to the V-NWDAF.

Step S303, receiving, by the V-NWDAF, the first message and sending a second message for indicating the analytics information to the V-Consumer NF.

Step S304, determining, by the H-NWDAF, that the User Consent is modified or revoked.

Step S305, sending, by the H-NWDAF, a first notification message to the V-NWDAF.

Step S306, receiving, by the V-NWDAF, the first notification message and sending a second notification message to the V-Consumer NF.

In some possible embodiments, the second notification message is configured for instructing the V-Consumer NF to stop processing the analytics information and delete the obtained analytics information. That is, after receiving this second notification message, the V-Consumer NF will stop processing the analytics information and delete the obtained analytics information.

In the embodiments of this disclosure, a method for checking User Consent in the roaming scenario of enablers for Network Automation (eNA) project is provided. In the scenario where the VPLMN requests analytics information from the HPLMN, this method can ensure that the user's privacy data is not leaked during the interaction process, improving security and reliability. Moreover, when user consent modification or revocation is involved, the HPLMN can also provide timely notifications to avoid the leakage of privacy data.

According to an embodiment of this disclosure, a method for receiving data in a roaming scenario is provided, and this method is performed by the V-NWDAF.

FIG. 4 is a flowchart of a method for receiving data in a roaming scenario illustrated according to an exemplary embodiment. The method, as shown in FIG. 4, includes steps S401 to S403, specifically:

Step S401, sending, by a V-NWDAF according to a first request message from a V-Consumer NF, a second request message to an H-NWDAF, where the second request message is configured for requesting analytics information.

Step S402, after the H-NWDAF checks that User Consent is granted, receiving, by the V-NWDAF, a first message for indicating the analytics information, sent by the H-NWDAF.

Step S403, sending, by the V-NWDAF, a second message for indicating the analytics information to the V-Consumer NF.

In some possible embodiments, the first request message is, for example, "Nnwdaf_AnalyticsSubscription_Subscribe()".

In some possible embodiments, the second request message is, for example, "Analytics Request()".

In some possible embodiments, the User Consent can represent the authorization status of the user for relevant data. The User Consent can be stored in the HPLMN-side network, indicating whether the analysis results or analytics information of the UE in the HPLMN-side network is allowed to be obtained. The H-NWDAF can perform relevant verification and authorization checks based on the User Consent to decide whether to provide analytics information to the VPLMN.

In some possible embodiments, the first message is, for example, "Analytics Response()".

In some possible embodiments, the second message is, for example, "Nnwdaf_AnalyticsSubscription_Notify()".

In the embodiments of this disclosure, in a roaming scenario, the V-Consumer NF can request analytics information from the H-NWDAF via the V-NWDAF. After the H-NWDAF checks that User Consent is granted on the HPLMN side, the analytics information is provided for the V-Consumer NF. This approach not only enables data exchange between the VPLMN and the HPLMN but also checks the User Consent to effectively protect the security of user data.

According to an embodiment of this disclosure, a method for receiving data in a roaming scenario is provided, and this method is performed by the V-NWDAF. The method includes steps S400 to S403, specifically:

Step S400, receiving, by the V-NWDAF, a first request message from a V-Consumer NF.

Step S401, sending, by the V-NWDAF according to the first request message from the V-Consumer NF, a second request message to an H-NWDAF, where the second request message is configured for requesting analytics information.

Step S402, after the H-NWDAF checks that User Consent is granted, receiving, by the V-NWDAF, a first message for indicating the analytics information, sent by the H-NWDAF.

Step S403, sending, by the V-NWDAF, a second message for indicating the analytics information to the V-Consumer NF.

In some possible embodiments, the first request message includes at least one of the following: a user equipment (UE) identifier (UE ID) corresponding to the analytics information, or a data processing identifier (Data Processor ID) corresponding to the analytics information.

For example, the first request message includes a UE identifier, or the first request message includes a data processing identifier, or the first request message includes both a UE identifier and a data processing identifier.

In an example, the UE identifier can correspond to an identifier of a target UE, that is, the analytics information requested by the V-NWDAF is the analytics information related to the UE corresponding to the UE identifier.

The UE identifier can include the UE ID of one user equipment or the UE IDs of more than one user equipment.

In some possible embodiments, the UE identifier (UE ID) can include multiple forms and can uniquely identify the user equipment or the SIM card in the user equipment. For example, the UE identifier can be a Subscription Concealed Identifier (SUCI), a Subscription Permanent Identifier (SUPI), or other IDs that can identify the UE. Among them, the SUPI is a unique identifier assigned by the network operator to each SIM card, and the SUCI is an identifier generated by concealing the SUPI through an encryption scheme.

In an example, the data processing identifier is an identifier related to the requested analytics information.

In some possible embodiments, the data processing identifier can be a PLMN ID, an Application ID, a Service ID, an analytics task ID (analytics ID), or other IDs that can identify data processing task, and is not limited here.

Taking the data processing identifier as an analytics task ID as an example, each analytics task corresponds to an analytics task identifier. For example, analytics task 1 corresponds to analytics ID1, and analytics task 2 corresponds to analytics ID2, etc.

In some possible embodiments, the V-Consumer NF may directly send the first request message to the V-NWDAF, as shown in FIG. 2 or FIG. 3.

In some possible embodiments, when the AF serves as the V-Consumer NF, the V-Consumer NF will indirectly send the first request message to the V-NWDAF through the NEF. For example, the AF first sends the first request message to the NEF, and then the NEF sends the first request message to the V-NWDAF.

According to an embodiment of this disclosure, a method for receiving data in a roaming scenario is provided, and this method is performed by the V-NWDAF. The method includes steps S400, S401-1, S401-2, S402, and S403, specifically:

Step S400, receiving, by the V-NWDAF, a first request message from a V-Consumer NF.

Step S401-1, after receiving the first request message, determining, by the V-NWDAF according to a local operator policy and/or a regulatory policy of a VPLMN, whether the VPLMN is allowed to obtain analytics information from an HPLMN.

Step S401-2, in response an allowance for obtaining the analytics information from the HPLMN, sending, by the V-NWDAF, a second request message to the H-NWDAF, where the second request message is configured for requesting the analytics information.

Step S402, after the H-NWDAF checks that User Consent is granted, receiving, by the V-NWDAF, a first message for indicating the analytics information, sent by the H-NWDAF.

Step S403, sending, by the V-NWDAF, a second message for indicating the analytics information to the V-Consumer NF.

In the embodiments of this disclosure, the V-NWDAF can perform checks or verifications on the VPLMN side according to the local operator policy and/or regulatory policy of the HPLMN. The V-NWDAF will only send the second request message upon confirming that it is allowed to obtain analytics information from the HPLMN, that is, when it is allowed to use the analytics information obtained from the HPLMN in the VPLMN.

According to an embodiment of this disclosure, a method for receiving data in a roaming scenario is provided, and this method is performed by the V-NWDAF. The method includes steps S401' to S403, specifically:
Step S401', directly sending, by the V-NWDAF according to a first request message from a V-Consumer NF, a second request message to an H-NWDAF, where the second request message is configured for requesting analytics information.

Step S402, after the H-NWDAF checks that User Consent is granted, receiving, by the V-NWDAF, a first message for indicating the analytics information, sent by the H-NWDAF.

Step S403, sending, by the V-NWDAF, a second message for indicating the analytics information to the V-Consumer NF.

In this embodiment, the V-NWDAF serves as a Central Network Function in the VPLMN (V-Central NF) in Step S401'.

Alternatively, the method includes steps S401" to S403, specifically:
Step S401", sending, by the V- NWDAF according to a first request message from a V-Consumer NF, a second request message to an H-NWDAF via a V-Central NF, where the second request message is configured for requesting analytics information.

Step S402, after the H-NWDAF checks that User Consent is granted, receiving, by the V-NWDAF, a first message for indicating the analytics information, sent by the H-NWDAF.

Step S403, sending, by the V-NWDAF, a second message for indicating the analytics information to the V-Consumer NF.

In this embodiment, the V-NWDAF does not serve as the V-Central NF in step S401". In this case, the V-Central NF can be one of the following: a DCCF, a NEF, or a new network function such as GEF.

In some possible embodiments, the V-Central NF is one of the following:
the V-NWDAF;
a Data Collection Coordination Functionality (DCCF);
a Network Exposure Function (NEF);
a new network function, such as Gateway Exposure Function (GEF).

The V-Central NF can serve as a processing center on the VPLMN side to perform data processing or control for enablers for Network Automation (eNA) in the roaming scenario. For example, it can receive data from the HPLMN side and send and receive data from network elements on the VPLMN side.

In the embodiments of this disclosure, depending on whether the V-NWDAF serves as the V-Central NF, it may communicate with the H-NWDAF in different ways to achieve information interaction.

According to an embodiment of this disclosure, a method for receiving data in a roaming scenario is provided, and this method is performed by the V-NWDAF.

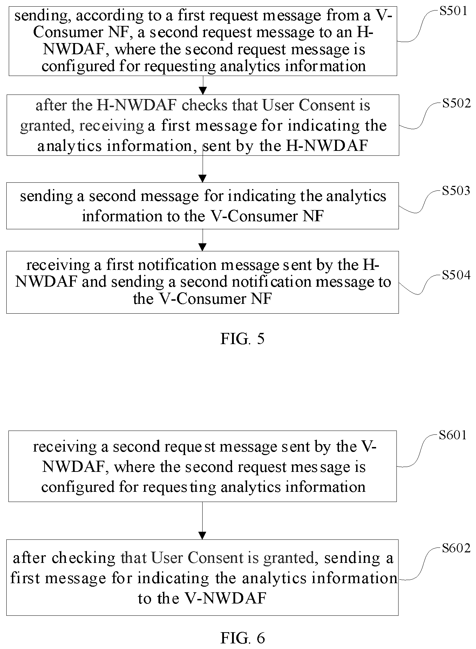

FIG. 5 is a flowchart of a method for receiving data in a roaming scenario illustrated according to an exemplary embodiment. As shown in FIG. 5, the method includes steps S501 to S504, specifically:

Step S501, sending, by the V-NWDAF according to a first request message from a V-Consumer NF, a second request message to an H-NWDAF, where the second request message is configured for requesting analytics information.

Step S502, after the H-NWDAF checks that User Consent is granted, receiving, by the V-NWDAF, a first message for indicating the analytics information, sent by the H-NWDAF.

Step S503, sending, by the V-NWDAF, a second message for indicating the analytics information to the V-Consumer NF.

Step S504, receiving, by the V-NWDAF, a first notification message sent by the H-NWDAF and sending a second notification message to the V-Consumer NF.

In this embodiment, the first notification message is used to notify that the User Consent is modified or revoked. The second notification message is used to instruct the V-Consumer NF to stop processing the analytics information and delete the obtained analytics information.

In some possible embodiments, after receiving the second notification message, the V-Consumer NF will stop processing the analytics information and delete the obtained analytics information.

In some possible embodiments, when the V-NWDAF is not the V-Central NF, step S504 can include the following Step S504', specifically:
Step S504', receiving, by the V-NWDAF, the first notification message sent by the H-NWDAF via the V-Central NF.

In the embodiments of this disclosure, when user consent modification or revocation is involved, the V-NWDAF can, according to the first notification message from the H-NWDAF, promptly notify the V-Consumer NF to stop processing the analytics information and delete the obtained analytics information. This enhances the security of transmission of setting data in the scenario of user consent modification or revocation, so as to avoid the leakage of privacy data in this scenario.

According to an embodiment of this disclosure, a method for sending data in a roaming scenario is provided, and this method is performed by the H-NWDAF.

FIG. 6 is a flowchart of a method for sending data in a roaming scenario illustrated according to an exemplary embodiment. As shown in FIG. 6, the method includes steps S601 to S602, specifically:
Step S601, receiving, by the H-NWDAF, a second request message sent by a V-NWDAF, where the second request message is configured for requesting analytics information.

Step S602, after checking that User Consent is granted, sending, by the H-NWDAF, a first message for indicating the analytics information to the V-NWDAF.

In some possible embodiments, the second request message is, for example, "Analytics Request()".

In some possible embodiments, "User Consent" can represent the authorization status of the user for relevant data. The User Consent can be stored in the HPLMN-side network, indicating whether the analysis results or analytics information of the UE in the HPLMN-side network is allowed to be obtained. The H-NWDAF can perform relevant verification and authorization checks based on the User Consent to decide whether to provide analytics information to the VPLMN.

In an example, when the user equipment accesses the HPLMN, the H-NWDAF interacts with the user equipment to obtain the user consent information and stores the user consent information in the UDM. After receiving a request message (such as the second request message) for acquiring analytics information or analysis results, the H-NWDAF interacts with the UDM to acquire the user consent information and stores the user consent information in the UE context in the H-NWDAF.

In another example, after receiving a request message (such as the second request message) for acquiring analytics information or analysis results, the H-NWDAF interacts with the user equipment through the VPLMN network to obtain the user consent information and stores the User Consent in the UE context in the H-NWDAF.

In yet another example, after receiving a request message (such as the second request message) for acquiring analytics information or analysis results, the H-NWDAF interacts with the network element that stores the User Consent in the VPLMN network to obtain the user consent information and stores the User Consent in the UE context in the H-NWDAF.

In some possible embodiments, the first message is, for example, "Analytics Response()".

In the embodiments of this disclosure, when the V-Consumer NF requests analytics information in a roaming scenario, after the H-NWDAF checks that User Consent is granted on the HPLMN side, the H-NWDAF can provide analytics information for the V-Consumer NF. This approach not only enables data exchange between the VPLMN and the HPLMN but also checks the User Consent to effectively protect the security of user data.

According to an embodiment of this disclosure, a method for sending data in a roaming scenario is provided, and this method is performed by the H-NWDAF. The method includes steps S601, S602-1, and S602-2, specifically:

Step S601, receiving, by the H-NWDAF, a second request message sent by a V-NWDAF, where the second request message is configured for requesting analytics information.

Step S602-1, determining, by the H-NWDAF, whether to allow providing the analytics information to the VPLMN according to User Consent and a local operator policy and/or a regulatory policy of the HPLMN.

Step S602-2, in response to an allowance for providing the analytics information to the VPLMN, sending, by the H-NWDAF, a first message for indicating the analytics information to the V-NWDAF.

In some possible embodiments, "User Consent" can represent the authorization status of the user for relevant data. The User Consent can be stored in the HPLMN-side network, indicating whether the analysis results or analytics information of the UE in the HPLMN-side network is allowed to be obtained. The H-NWDAF can perform relevant verification and authorization checks based on the User Consent to decide whether to provide analytics information to the VPLMN.

In an example, when the user equipment accesses the HPLMN, the H-NWDAF interacts with the user equipment to obtain the user consent information and stores the user consent information in the UDM. After receiving a request message (such as the second request message) for acquiring analytics information or analysis results, the H-NWDAF interacts with the UDM to acquire the user consent information and stores the user consent information in the UE context in the H-NWDAF.

In another example, after receiving a request message (such as the second request message) for acquiring analytics information or analysis results, the H-NWDAF interacts with the user equipment through the VPLMN network to obtain the user consent information and stores the User Consent in the UE context in the H-NWDAF.

In yet another example, after receiving a request message (such as the second request message) for acquiring analytics information or analysis results, the H-NWDAF interacts with the network element that stores the User Consent in the VPLMN network to obtain the user consent information and stores the User Consent in the UE context in the H-NWDAF.

In the embodiments of this disclosure, the H-NWDAF performs the user-consent-based verification and will only provide analytics information for the V-NWDAF after the H-NWDAF checks that the User Consent is granted. This approach not only enables data exchange between the VPLMN and the HPLMN but also checks the User Consent to effectively protect the security of user data.

According to an embodiment of this disclosure, a method for sending data in a roaming scenario is provided and this method is performed by the H-NWDAF. The method includes steps S601 to S603, specifically:
Step S601, receiving, by the H-NWDAF, a second request message sent by a V-NWDAF, where the second request message is configured for requesting analytics information.

Step S602, determining, by the H-NWDAF, whether to allow providing the analytics information to the VPLMN according to User Consent and a local operator policy and/or a regulatory policy of the HPLMN.

Step S603, when the User Consent is modified or revoked, sending a first notification message to the V-NWDAF.

In some possible embodiments, the H-NWDAF can send the first notification message to the V-NWDAF via a V-Central NF.

In some possible embodiments, the V-Central NF is one of the following: the V-NWDAF, a DCCF, a NEF, or a GEF.

In the embodiments of this disclosure, when the H-NWDAF determines that the User Consent is modified or revoked, it can promptly notify the V-NWDAF, so that the V-Consumer NF can stop processing the analytics information and delete the obtained analytics information.

According to an embodiment of this disclosure, a method for sending data in a roaming scenario is provided and this method is performed by the H-NWDAF. The method includes steps S601, S602, and S604, or the method includes steps S601 to S604.

The following is an example of the method including steps S601 to S604, specifically:

Step S601, receiving, by the H-NWDAF, a second request message sent by a V-NWDAF, where the second request message is configured for requesting analytics information.

Step S602, determining, by the H-NWDAF, whether to allow providing the analytics information to a VPLMN according to User Consent and a local operator policy and/or a regulatory policy of the HPLMN.

Step S603, when the User Consent is modified or revoked, sending, by the H-NWDAF, a first notification message to the V-NWDAF.

Step S604, when the User Consent is modified or revoked, updating, by the H-NWDAF, UE context stored in the H-NWDAF.

In this example, the order of step S603 and step S604 is only for illustration and not for limitation. For example, the H-NWDAF can perform step S603 and s604 simultaneously, or perform step S604 first.

In some possible embodiments, the UE context inside the H-NWDAF can store the User Consent before modification or revocation. When the User Consent is modified or revoked, the H-NWDAF can re-obtain the User Consent and update the User Consent stored in the UE context.

In the embodiments of this disclosure, in the scenario where the User Consent is modified or revoked, the H-NWDAF can promptly update and store the new User Consent, so as to be able to check the User Consent in subsequent interaction processes.

Based on the same concept as the above method embodiments, an embodiment of this disclosure also provides a device for receiving data in a roaming scenario. This device may have the functions of the V-NWDAF in the above-mentioned method embodiments and is configured to perform the steps performed by the V-NWDAF. These functions can be implemented by hardware, software, or hardware executing corresponding software. The hardware or software includes one or more modules corresponding to the above-mentioned functions.

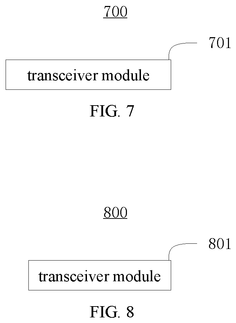

In a possible embodiment, the device 700 shown in FIG. 7 can serve as the V-NWDAF device involved in the above-mentioned method embodiments and perform the steps performed by the V-NWDAF in the above-mentioned method embodiments.

As shown in FIG. 7, the device 700 includes a transceiver module 701.

The transceiver module 701 is configured to send, according to a first request message from a V-Consumer NF, a second request message to an H-NWDAF, where the second request message is configured for requesting analytics information.

The transceiver module 701 is also configured to receive, from the H-NWDAF, a first message for indicating the analytics information after the H-NWDAF checks that the User Consent is granted.

The transceiver module 701 is also configured to send a second message for indicating the analytics information to the V-Consumer NF.

This disclosure also provides a communication device, including a processor and a memory. The memory is configured to store a computer program, and the processor is configured to execute the computer program to execute the method for receiving data in a roaming scenario corresponding to the V-NWDAF.

This disclosure also provides a computer-readable storage medium, in which instructions (or computer programs, programs) are stored. When the instructions are called and executed on a computer, the computer is caused to execute the method for receiving data in a roaming scenario corresponding to the V-NWDAF.

Based on the same concept as the above method embodiments, an embodiment of this disclosure also provides a device for sending data in a roaming scenario. This device may have the functions of the H-NWDAF in the above-mentioned method embodiments and is used to execute the steps performed by the H-NWDAF. These functions can be implemented by hardware, software, or hardware executing corresponding software. The hardware or software includes one or more modules corresponding to the above-mentioned functions.

In a possible embodiment, the device 800 shown in FIG. 8 can serve as the H-NWDAF device involved in the above-mentioned method embodiments and execute the steps performed by the H-NWDAF in the above-mentioned method embodiments.

As shown in FIG. 8, the device 800 includes a transceiver module 801.

The transceiver module 801 is configured to receive a second request message sent by a V-NWDAF, where the second request message is configured for requesting analytics information.

The transceiver module 801 is also configured to send a first message for indicating the analytics information to the V-NWDAF after checking that the User Consent is granted.

This disclosure also provides a communication device, including a processor and a memory. The memory is configured to store a computer program, and the processor is configured to execute the computer program to execute the method for sending data in a roaming scenario corresponding to the H-NWDAF.

This disclosure also provides a computer-readable storage medium, in which instructions (or computer programs, programs) are stored. When the instructions are called and executed on a computer, the computer is caused to execute the method for sending data in a roaming scenario corresponding to the H-NWDAF.

Obviously, those skilled in the art should understand that each processing unit or each step described above can be implemented by a general-purpose computing device. It can be concentrated on a single computing device or distributed on a network composed of multiple computing devices. Optionally, it can be implemented by program code executable by a computing device, so that it can be stored in a storage device and executed by a computing device, or each of them can be made into an individual integrated circuit module, or multiple modules or steps among them can be made into a single integrated circuit module for implementation. In this way, this disclosure is not limited to any specific combination of hardware and software.

After considering the specification and practicing the invention disclosed here, those skilled in the art will easily conceive of other implementations of the embodiments of this disclosure. This application is intended to cover any variations, uses, or adaptive changes of the embodiments of this disclosure. These variations, uses, or adaptive changes follow the general principles of the embodiments of this disclosure and include common knowledge or conventional technical means in the technical field not disclosed in this disclosure. The specification and embodiments are only regarded as exemplary, and the true scope and spirit of the embodiments of this disclosure are pointed out by the following claims.

It should be understood that the embodiments of this disclosure are not limited to the precise structure described above and shown in the drawings, and various modifications and changes can be made without departing from its scope. The scope of the embodiments of this disclosure is only limited by the appended claims.

### Industrial Applicability

In the embodiments of this disclosure, in a roaming scenario, the V-Consumer NF can request analytics information from the H-NWDAF via the V-NWDAF. After the H-NWDAF checks that the User Consent is granted on the HPLMN side, the analytics information is provided for the V-Consumer NF. This approach not only enables data exchange between the VPLMN and the HPLMN but also checks the User Consent to effectively protect the security of user data.

## Claims

1. A method for receiving data in a roaming scenario, performed by a Network Data Analytics Function in a Visited Public Land Mobile Network, V-NWDAF, the method comprising:
sending, according to a first request message from a Consumer Network Function in the Visited Public Land Mobile Network, V-Consumer NF, a second request message to a Network Data Analytics Function in a Home Public Land Mobile Network, H-NWDAF, wherein the second request message is configured for requesting analytics information;
after the H-NWDAF checks that User Consent is granted, receiving, from the H-NWDAF, a first message for indicating the analytics information; and
sending a second message for indicating the analytics information to the V-Consumer NF.

2. The method according to claim 1, further comprising:
receiving the first request message from the V-Consumer NF, wherein the first request message comprises at least one of: a user equipment, UE, identifier corresponding to the analytics information, or a data processing identifier corresponding to the analytics information.

3. The method according to claim 2, wherein sending, according to the first request message from the V-Consumer NF, the second request message to the H-NWDAF, comprises:
after receiving the first request message, determining, according to a local operator policy and/or a regulatory policy of the Visited Public Land Mobile Network, VPLMN, whether the VPLMN is allowed to obtain analytics information from the Home Public Land Mobile Network, HPLMN; and
in response to an allowance for obtaining the analytics information from the HPLMN, sending the second request message to the H-NWDAF.

4. The method according to claim 1 or 2, wherein sending the second request message to the H-NWDAF comprises:
directly sending the second request message to the H-NWDAF when the V-NWDAF serves as a Central Network Function in the Visited Public Land Mobile Network, V-Central NF; or
sending, via the V-Central NF, the second request message to the H-NWDAF.

5. The method according to claim 4, wherein the V-Central NF is one of:
the V-NWDAF;
a Data Collection Coordination Function, DCCF;
a Network Exposure Function, NEF; or
a Gateway Exposure Function, GEF.

6. The method according to claim 1, further comprising:
receiving a first notification message sent by the H-NWDAF, wherein the first notification message is configured for notifying that the User Consent is modified or revoked; and
sending a second notification message to the V-Consumer NF, wherein the second notification message is configured for instructing the V-Consumer NF to stop processing the analytics information and delete the obtained analytics information.

7. The method according to claim 6, wherein receiving the first notification message sent by the H-NWDAF comprises:
receiving, via a Central Network Function in the Visited Public Land Mobile Network, V-Central NF, the first notification message sent by the H-NWDAF.

8. A method for sending data in a roaming scenario, performed by a Network Data Analytics Function in a Home Public Land Mobile Network, H-NWDAF, the method comprising:
receiving a second request message sent by a Network Data Analytics Function in a Visited Public Land Mobile Network, V-NWDAF, wherein the second request message is configured for requesting analytics information; and
after checking that User Consent is granted, sending a first message for indicating the analytics information to the V-NWDAF.

9. The method according to claim 8, wherein, after checking that the User Consent is granted, sending the first message for indicating the analytics information to the V-NWDAF comprises:
determining, according to the User Consent and a local operator policy and/or a regulatory policy of the Home Public Land Mobile Network, HPLMN, whether to allow providing the analytics information to the VPLMN; and
in response to an allowance for providing the analytics information to the VPLMN, sending the first message for indicating the analytics information to the V-NWDAF.

10. The method according to claim 8, further comprising:
when the User Consent is modified or revoked, sending a first notification message to the V-NWDAF.

11. The method according to claim 8, further comprising:
when the User Consent is modified or revoked, updating user equipment, UE, context stored in the H-NWDAF.

12. A device for receiving data in a roaming scenario, configured in a Network Data Analytics Function in a Visited Public Land Mobile Network, V-NWDAF, the device comprising:
a transceiver module configured to send, according to a first request message from a Consumer Network Function consumer in the Visited Public Land Mobile Network, V-Consumer NF, a second request message to a Network Data Analytics Function in a Home Public Land Mobile Network, H-NWDAF, wherein the second request message is configured for requesting analytics information;
wherein the transceiver module is further configured to:
after the H-NWDAF checks that User Consent is granted, receive, from the H-NWDAF, a first message for indicating the analytics information; and
send a second message for indicating the analytics information to the V-Consumer NF.

13. A device for sending data in a roaming scenario, configured in a Network Data Analytics Function in a Home Public Land Mobile Network, H-NWDAF, the device comprising:
a transceiver module configured to receive a second request message sent by a Network Data Analytics Function in a Visited Public Land Mobile Network, V-NWDAF, wherein the second request message is configured for requesting analytics information;
wherein the transceiver module is further configured to, after checking that User Consent is granted, send a first message for indicating the analytics information to the V-NWDAF.

14. A communication device, comprising:
a memory configured to store a computer program; and
a processor configured to execute the computer program to execute the method according to any one of claims 1 to 7.

15. A communication device, comprising:
a memory configured to store a computer program; and
a processor configured to execute the computer program to execute the method according to any one of claims 8 to 11.

16. A computer-readable storage medium, having instructions stored therein that, when called and executed on a computer, cause the computer to execute the method according to any one of claims 1 to 7.

17. A computer-readable storage medium, having instructions stored therein that, when called and executed on a computer, cause the computer to execute the method according to any one of claims 8 to 11.
